# EUROPEAN PATENT APPLICATION

(11) **EP 4 807 998 A1**
(43) Date of publication of application: **16.09.2026**
(21) Application number: 24875625.6
(22) Date of filing: 08.08.2024
(51) Int. Cl.: H04B 1/00

(54) **WIRELESS COMMUNICATION SYSTEM AND CONTROL METHOD**

(30) Priority: 09.11.2023 US 202363597529 P
(71) Applicant: Delta Electronics, Inc., Taoyuan City 333 (TW)
(72) Inventor: LEE, Yu-wei, Taoyuan City 333 (TW); SHR, Ren-chin, Taoyuan City 333 (TW); CHEN, Chin-ming, Taoyuan City 333 (TW)
(74) Representative: Riccardi, Elisa
(86) International application number: PCT/CN2024/110839
(87) International publication number: WO 2025/097898

(57) **Abstract**

A wireless communication system is disclosed. The wireless communication system includes a control substrate and several energy storage devices. Each of the several energy storage devices includes an energy storage element and a node substrate. The node substrate includes a first antenna circuit and a second antenna circuit. The first antenna circuit is configured to receive the control message from the control substrate adjacent to the first antenna circuit or a first adjacent antenna circuit of a first adjacent node substrate of a first adjacent one of the several energy storage devices. The second antenna circuit is configured to transmit a reply message generated based on the control message to the control substrate adjacent to the second antenna circuit or a second adjacent antenna circuit of the first adjacent node substrate of the first adjacent one of the several energy storage devices.

## Description

### Field of Disclosure

The present disclosure relates to a wireless communication system and a control method. Specifically, the present disclosure relates to a wireless communication system and control method of battery management system (BMS).

### Technical Background

The current battery management system measures the battery voltage. There are many connections connected to the monitoring circuit board. After measuring the voltage, temperature, etc. through the chip on the circuit board, the information is then sent to the upper layer management device or control substrate. However, complex wiring has a negative impact on mass production costs, quality and reliability. Some automated battery management systems have been proposed. If automated measurement is to be performed, each battery unit must have its own measure circuit board to avoid complex wiring and transmit measure information through wireless communication. However, radio frequency (RF) wireless communication is prone to signal interference problems. Furthermore, if the node density of battery units is too high, they will interfere with each other and affect the reliability of the system. In order to solve the above problems, some battery management systems using daisy chain topology (daily chain) have been proposed. However, this point-to-point transmission method results in higher latency.

Therefore, how to effectively apply wireless communication transmission technology to the battery management system and reduce the delay is one of the issues to be solved in the field.

### SUMMARY

The disclosure provides a wireless communication system. The wireless communication system includes a control substrate and several energy storage devices. The control substrate is configured to generate a control message. Each of the several energy storage devices includes an energy storage element and a node substrate. The node substrate is electrically connected to the energy storage element, in which the node substrate includes a first antenna circuit and a second antenna circuit, in which the first antenna circuit includes a first antenna unit and a second antenna unit disposed at opposite sides of the node substrate, and the second antenna circuit includes a third antenna unit and a fourth antenna unit disposed at opposite sides of the node substrate, in which the first antenna circuit is configured to receive the control message from the control substrate adjacent to the first antenna circuit or a first adjacent antenna circuit of a first adjacent node substrate of a first adjacent one of the several energy storage devices, in which the second antenna circuit is configured to transmit a reply message generated based on the control message to the control substrate adjacent to the second antenna circuit or a second adjacent antenna circuit of the first adjacent node substrate of the first adjacent one of the several energy storage devices.

The disclosure provides a control method. The control method is suitable for a wireless communication system including a control substrate, several node substrates and several devices under test, in which each one of the several node substrates includes a first antenna circuit and a second antenna circuit, in which the first antenna circuit includes a first antenna unit and a second antenna unit disposed at opposite sides of each one of the several node substrates, and the second antenna circuit includes a third antenna unit and a fourth antenna unit disposed at opposite sides of each one of the several node substrates, in which the control method includes the following operations: generating a control message by the control substrate; receiving the control message by the first antenna circuit from the control substrate adjacent to the first antenna circuit or a first adjacent antenna circuit of a first adjacent node substrate of a first adjacent one of the several node substrates; and transmitting a reply message generated based on the control message from the second antenna circuit to the control substrate adjacent to the second antenna circuit or a second adjacent antenna circuit of the first adjacent node substrate of the first adjacent one of the several node substrates.

It is to be understood that both the foregoing general description and the following specific description are exemplary and explanatory only and are intended to provide further explanation of the present disclosure as claimed.

### BRIEF DESCRIPTION OF THE DRAWINGS

Fig. 1 is a schematic diagram illustrating a wireless communication system according to some embodiments of the present disclosure.
Fig. 2 is a schematic diagram illustrating a top view of a wireless communication system according to some embodiments of the present disclosure.
Fig. 3 is a schematic diagram illustrating a node substrate according to some embodiments of the present disclosure.
Fig. 4 is a schematic diagram illustrating a top view of another wireless communication system according to some embodiments of the present disclosure.
Fig. 5 is a schematic diagram illustrating a node substrate according to some embodiments of the present disclosure.
Fig. 6 is a schematic diagram illustrating an operation method of the wireless communication system according to some embodiments of the present disclosure.
Fig. 7 is a schematic diagram illustrating another operation method of the wireless communication system according to some embodiments of the present disclosure.
Fig. 8 is a schematic diagram illustrating a top view of another wireless communication system according to some embodiments of the present disclosure.
Fig. 9 is a flow chart illustrating a control method according to some embodiments of the present disclosure.

Denotation of component numerals
100: wireless communication system
100A,100B,100C: top view
110,110A,110B: control substrate
X,Y,Z: direction
130A,130B,130C: energy storage device
132A,132B,132C: node substrate
132A1,132B1,132A2,132B2: node substrate
134A,134B,134C: energy storage element
212A,212B,232A1,232B1,232A2: antenna unit
232B2,252A1,252A2,252B1,252B2: antenna unit
231A,231B,251A,251B: antenna circuit
233A,233B,253A,253B: signal amplifier
214A,214B,234A,234B,254A,254B: communication unit
216,236,256: control unit
238,258: measuring unit
S3A,S3B: switch
P31,P32,P33,P34,P35,P36: end point
L3A,L3B,L5: low noise amplifier
M3A1,M3A2,M3B1,M3B2,M5A,M5B: frequency mixer
ADC3A,ADC3B,ADC5: analog to digital converter
DAC3A,DAC3B,DAC5: digital to analog converter
412A,412B,432A1,432A2,432B1: antenna unit
432B2,452A1,452A2,452B1,452B2: antenna unit
431A,431B,451A,451B: antenna circuit
433A,433B,453A,453B: signal amplifier
S4A,S4B,S5: switch
P41,P42,P43,P44,P45,P46,P51,P52,P53: end point
414A,414B,434,454: communication unit
416,436,456: control unit
438,458: measuring unit
600,700: operation method
T0,T1,T2,T3: time point
CS6,CS7: control message
RS61,RS71,RS72,RS73: reply message
900: control method
S910,S920,S930: operation

### DETAILED DESCRIPTION

The following is a detailed description of embodiments in conjunction with the accompanying drawings, but the embodiments provided are not configured to limit the scope of the disclosure, and the description of the structural operation is not configured to limit the order of its execution. Any structure of the recombination of components to produce a device with equal functions is within the scope of this disclosure. In addition, the drawings are for illustrative purposes only. For ease of understanding, the same components or similar components will be labeled with the same symbols in the following description.

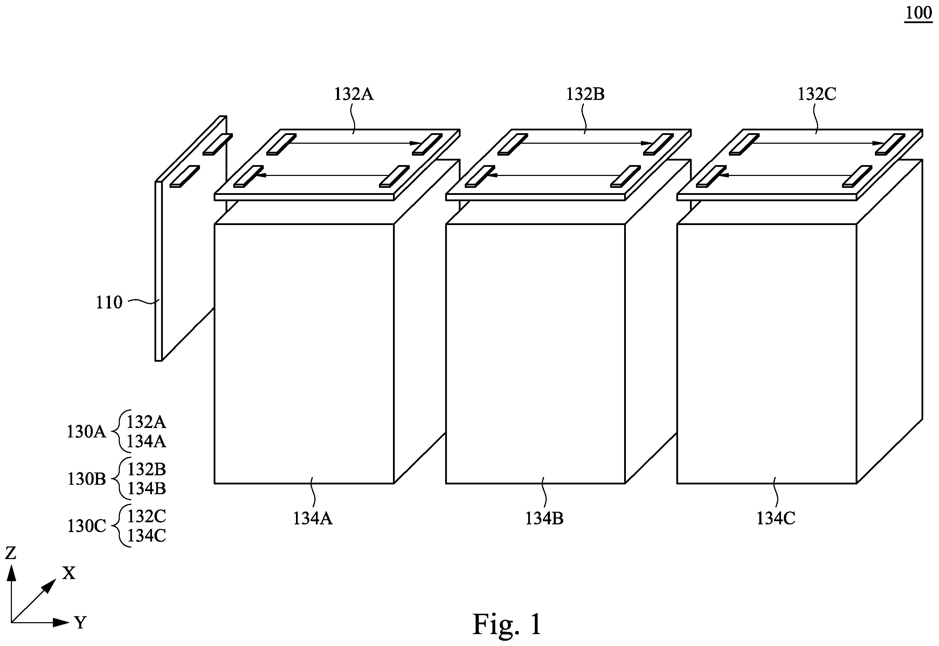

Reference is made to Fig. 1. Fig. 1 is a schematic diagram illustrating a wireless communication system 100 according to some embodiments of the present disclosure. In Fig. 1, the wireless communication system 100 includes a control substrate 110 and several energy storage devices 130A to 130C. Each of the energy storage devices 130A to 130C includes an energy storage element and a node substrate. In detail, the energy storage device 130A includes an energy storage element 134A and a node substrate 132A, the energy storage device 130B includes an energy storage element 134B and a node substrate 132B, and the energy storage device 130C includes an energy storage element 134C and a node substrate 132C.

In the connection relationship, the node substrate 132A is electrically connected to the energy storage element 134A, the node substrate 132B is electrically connected to the energy storage element 134B, and the node substrate 132C is electrically connected to the energy storage element 134C. Furthermore, the control substrate 110 and the node substrate 132A are communicatively connected, the node substrate 132A and the node substrate 132B are communicatively connected, and the node substrate 132B and the node substrate 132C are further communicatively connected.

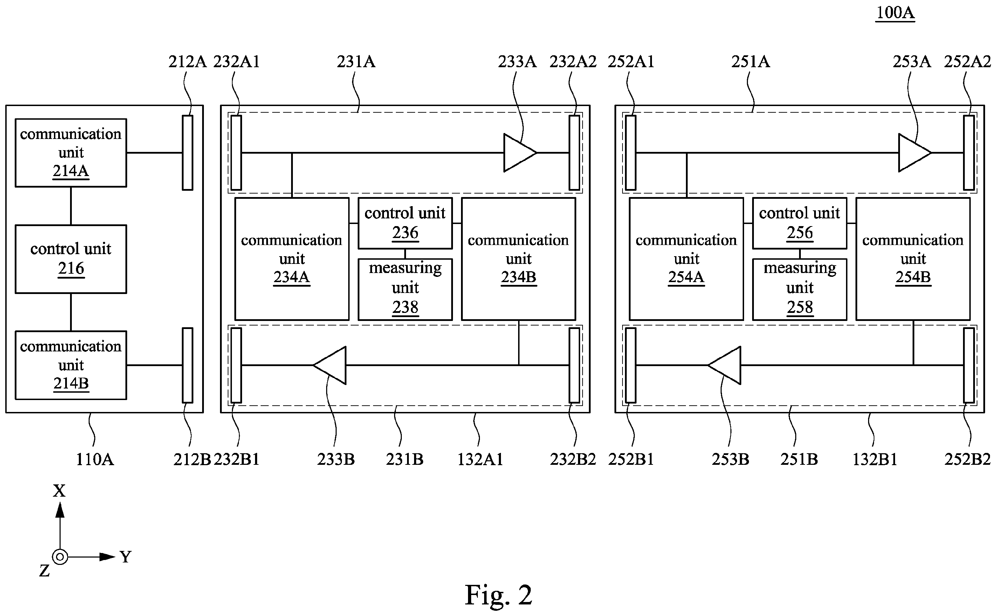

The detailed structure and operation method of the wireless communication system 100 will be described below with reference to Fig. 2 to Fig. 8.

Reference is made to Fig. 2. Fig. 2 is a schematic diagram illustrating a top view 100A of a wireless communication system 100 according to some embodiments of the present disclosure. For ease of illustration and description, only the control substrate 110A, the node substrate 132A1 and the node substrate 132B1 are shown in Fig. 2. The control substrate 110A is the top view of the control substrate 110 in Fig. 1. The node substrate 132A1 is a top view of an embodiment of the node substrate 132A in Fig. 1. Similarly, the node substrate 132B1 is a top view of an embodiment of the node substrate 132B in Fig. 1.

It should be noted that, although the node substrate 132C in Fig. 1 is not shown in Fig. 2, the structure and the operation method of the node substrate 132C are similar to those of the node substrate 132A1 and the node substrate 132B1.

The control substrate 110A includes an antenna unit 212A, an antenna unit 212B, a communication unit 214A, a communication unit 214B and a control unit 216. In the connection relationship, the antenna unit 212A is coupled to the communication unit 214A, the antenna unit 212B is coupled to the communication unit 214B, and the communication units 214A and 214B are coupled to the control unit 216 respectively.

The node substrate 132A1 includes an antenna circuit 231A, an antenna circuit 231B, a communication unit 234A, a communication unit 234B, a control unit 236 and a measuring unit 238. In the connection relationship, the antenna circuit 231A is coupled to the communication unit 234A, and the communication unit 234A is coupled to the control unit 236. The antenna circuit 231B is coupled to the communication unit 234B, and the communication unit 234B is coupled to the control unit 236. The control unit 236 is coupled to the measuring unit 238.

The antenna circuit 231A includes the antenna unit 232A1, the antenna unit 232A2 and the signal amplifier 233A. The antenna circuit 231B includes the antenna unit 232B1, the antenna unit 232B2 and the signal amplifier 233B. In the connection relationship, the antenna unit 232A1 is coupled to the signal amplifier 233A, and the signal amplifier 233A is coupled to the antenna unit 232A2. The antenna unit 232B1 is coupled to the signal amplifier 233B, and the signal amplifier 233B is further coupled to antenna unit 232B2. In some embodiments, the signal amplifiers 233A and 233B can in turn be implemented as signal retransmission devices.

Similarly, the node substrate 132B1 includes an antenna circuit 251A, an antenna circuit 251B, a communication unit 254A, a communication unit 254B, a control unit 256 and a measuring unit 258. In the connection relationship, the antenna circuit 251A is coupled to the communication unit 254A, and the communication unit 254A is coupled to control unit 256. The antenna circuit 251B is coupled to the communication unit 254B, and the communication unit 254B is coupled to the control unit 256. The control unit 256 is coupled to the measuring unit 258.

The antenna circuit 251A includes an antenna unit 252A1, an antenna unit 252A2 and a signal amplifier 253A. The antenna circuit 251B includes an antenna unit 252B1, an antenna unit 252B2 and a signal amplifier 253B. In the connection relationship, the antenna unit 252A1 is coupled to the signal amplifier 253A, and the signal amplifier 253A is coupled to the antenna unit 252A2. The antenna unit 252B1 is coupled to the signal amplifier 253B, and the signal amplifier 253B is coupled to the antenna unit 252B2. In some embodiments, the signal amplifiers 253A and 253B can in turn be implemented as signal retransmission devices.

As illustrated in Fig. 2, the antenna unit 232A1 and the antenna unit 232A2 are disposed at opposite sides of the node substrate 132A1, and the antenna unit 232B1 and the antenna unit 232B2 are disposed at opposite sides of the node substrate 132A1. Similarly, the antenna unit 252A1 and the antenna unit 252A2 are disposed at opposite sides of the node substrate 132B1, and the antenna unit 252B1 and the antenna unit 252B2 are disposed at opposite sides of the node substrate 132B1.

In some embodiments, in terms of arrangement, the antenna unit 212A and the antenna unit 232A1 are opposite to each other and aligned with each other, the antenna unit 212B and the antenna unit 232B1 are opposite to each other and aligned with each other, the antenna unit 232A2 and the antenna unit 252A1 are opposite to each other and aligned with each other, the antenna unit 232B2 and the antenna unit 252B1 are opposite to each other and aligned with each other.

In the embodiment of Fig. 2, the antenna unit 212A, the antenna unit 232A1, the antenna unit 232A2, the antenna unit 252A1 and the antenna unit 252A2 form a control channel, and the control channel is configured to transmit the control message generated by the control unit 216. On the other hand, the antenna unit 212B, the antenna unit 232B1, the antenna unit 232B2, the antenna unit 252B1 and the antenna unit 252B2 form a data channel, and the data channel is configured to transmit a reply message generated by the control unit 236 or the control unit 256 based on the control message.

In detail, after the antenna unit 212A transmits the control message to the antenna unit 232A1, the signal intensity of the control message can be directly amplified through the signal amplifier 233A of the antenna circuit 231A, and then the control message is transmitted to the antenna unit 252A1 of the antenna circuit 251A through the antenna unit 232A2 of the antenna circuit 231A. After the antenna unit 252A1 receives the control message, the signal intensity of the control message can be directly amplified through the signal amplifier 253A of the antenna circuit 251A, and then the control message is transmitted to the adjacent next node substrate (not shown) through the antenna unit 252A2.

On the other hand, when the control unit 256 generates a reply message based on the control message, the signal intensity of the reply message can be amplified through the signal amplifier 253B of the antenna circuit 251B, and then the replay message can be transmitted to the antenna unit 232B2 of the antenna circuit 231B through the antenna unit 252B1 of the antenna circuit 251B. After the antenna unit 232B2 receives the reply message generated by the control unit 256, the signal intensity of the reply message can be directly amplified through the signal amplifier 233B of antenna circuit 231B, and then the reply message is transmitted to the antenna unit 212B of the control substrate 110A through the antenna unit 232B1.

In this way, in the embodiments of the present disclosure, through the control channel and the data channel, the control message can be quickly transmitted from the control substrate 110A to the several node substrates 132A1 and 132B1, and the reply message can be quickly transmitted from the node substrates 132A1 and 132B1 back to the control substrate 110A. The embodiments of the present disclosure can transmit data or messages through wireless signals while reducing the delay caused by point-to-point transmission.

Reference is made to Fig. 2 again. In some embodiments, after receiving the control message, the antenna circuit 231A transmits the control message directly to the adjacent node substrate 132B1 via the antenna unit 232A2. The antenna unit 232A1 of the antenna circuit 231A further transmits the control message to the communication unit 234A and control unit 236. After the control unit 236 receives the control message, the control unit 236 determines whether to perform a measure operation or other operations according to the control message. In some embodiments, the measure operation is performed by the measuring unit 238. According to the content of the control message, the measuring unit 238 may perform voltage measure, current measure, temperature measure and/or impedance measure of the energy storage element (e.g., battery).

In some embodiments, according to the measuring operation of the measuring unit 238, the control unit 236 generates a reply message, and the control unit 236 transmits the reply message to the antenna unit 212B via the communication unit 234B and the antenna unit 232B1 of the antenna circuit 231B.

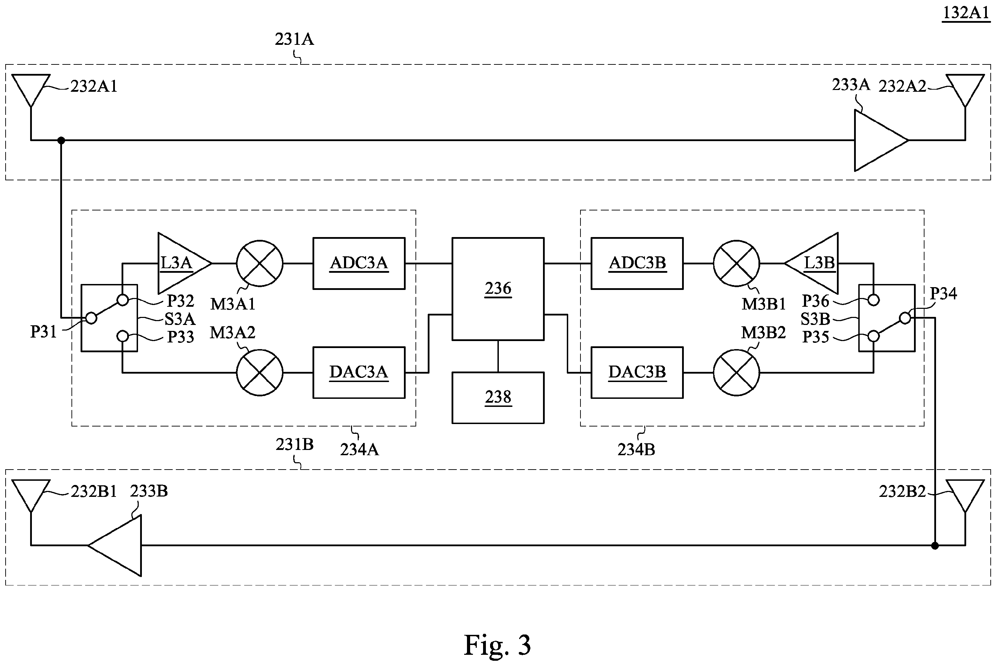

Reference is made to Fig. 3 together. Fig. 3 is a schematic diagram illustrating a node substrate 132A1 according to some embodiments of the present disclosure. The node substrate 132A1 in Fig. 3 is only shown for illustration purposes. However, the structure and operation of the node substrate 132A1 depicted in Fig. 3 are also applicable to the node substrates 132B and 132C in Fig. 1 and the node substrate 132B1 in Fig. 2.

As illustrated in Fig. 3, in some embodiments, the node substrate 132A1 includes the antenna circuit 231A, the antenna circuit 231B, the communication unit 234A, the communication unit 234B, the control unit 236 and the measuring unit 238. In the connection relationship, the antenna circuit 231A is coupled to the communication unit 234A, and the communication unit 234A is coupled to the control unit 236. The antenna circuit 231B is coupled to the communication unit 234B, and the communication unit 234B is coupled to the control unit 236. The control unit 236 is coupled to the measuring unit 238.

The structure and operation method of the antenna circuits 231A and 231B in Fig. 3 are similar to those of the antenna circuits 231A and 231B in Fig. 2.

As illustrated in Fig. 3, the communication unit 234A includes a switch S3A, a low noise amplifier L3A, a frequency mixer M3A1, an analog to digital converter ADC3A, a frequency mixer M3A2 and a digital to analog converter DAC3A. In the connection relationship, the low noise amplifier L3A is coupled to the switch S3A, the frequency mixer M3A1 is coupled to the low noise amplifier L3A, the analog to digital converter ADC3A is coupled to the frequency mixer M3A1, the frequency mixer M3A2 is coupled to the switch S3A, the digital to analog converter DAC3A is coupled to the frequency mixer M3A2.

Similarly, the communication unit 234B includes a switch S3B, a low noise amplifier L3B, a frequency mixer M3B1, an analog to digital converter ADC3B, a frequency mixer M3B2 and a digital to analog converter DAC3B. In the connection relationship, the low noise amplifier L3B is coupled to the switch S3B, the frequency mixer M3B1 is coupled to the low noise amplifier L3B, the analog to digital converter ADC3B is coupled to the frequency mixer M3B1, the frequency mixer M3B2 is coupled to the switch S3B, the digital to analog converter DAC3B is coupled to the frequency mixer M3B2.

In some embodiments, the frequency mixers M3A1 and M3B1 are down-conversion frequency mixers, while the frequency mixers M3A2 and M3B2 are up-conversion frequency mixers.

During operation, switch S3A and switch S3B can be selectively connected to the low noise amplifier or the up-frequency mixer. As illustrated in Fig. 3, the switch S3A includes end points P31, P32 and P33. The switch S3A can selectively connect end point P31 to P32 or connect end point P31 to P33. Similarly, the switch S3B includes end points P34, P35 and P36. The switch S3B can selectively connect end point P34 to P35 or connect end point P34 to P36.

When the switch is connected to the low noise amplifier, the communication unit is configured to receive control messages. On the other hand, when the switch is connected to the up-frequency mixer, the communication unit is configured to transmit reply messages.

For example, as illustrated in Fig. 3, since the switch S3A is connected to the low noise amplifier L3A, the communication unit 234A is configured to receive the control messages from the antenna circuit 231A. On the other hand, since the switch S3B is connected to the up-frequency mixer M3B2, the communication unit 234B is configured to transmit the reply messages to antenna circuit 231B.

As shown in Fig. 3, the structures of the communication units 234A and 234B are the same. By connecting the switch to the low noise amplifier or the up-frequency mixer, it can be determined whether the communication unit is configured to receive control messages or to send reply messages.

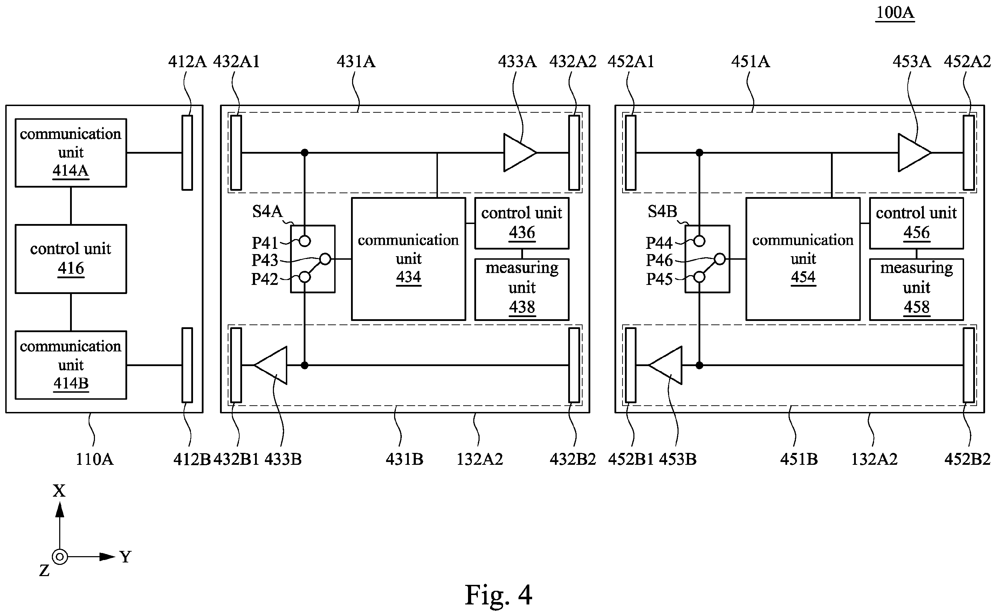

Reference is made to Fig. 4. Fig. 4 is a schematic diagram illustrating a top view 100B of another wireless communication system 100 according to some embodiments of the present disclosure. For ease of illustration and description, in Fig. 4, only the control substrate 110B, the node substrate 132A2 and the node substrate 132B2 are shown. The control substrate 110B is the top view of the control substrate 110 in Fig. 1. The node substrate 132A2 is a top view of another embodiment of the node substrate 132A in Fig. 1. Similarly, the node substrate 132B2 is a top view of another embodiment of the node substrate 132B in Fig. 1.

It should be noted that, although the node substrate 132C in Fig. 1 is not shown in Fig. 2, the structure and operation method of the node substrate 132C are similar to those of the node substrate 132A2 and the node substrate 132B2.

The control substrate 110B includes the antenna unit 412A, the antenna unit 412B, the communication unit 414A, the communication unit 414B and the control unit 416. In the connection relationship, the antenna unit 412A is coupled to the communication unit 414A, the antenna unit 412B is coupled to the communication unit 414B, and the communication units 414A and 414B are coupled to the control unit 416 respectively. The operation method of the control substrate 110B is similar to the operation method of the control substrate 110A in Fig. 2.

The node substrate 132A2 includes a switch S4A, an antenna circuit 431A, an antenna circuit 431B, a communication unit 434, a control unit 436, and a measuring unit 438. In the connection relationship, the antenna circuit 431A and the antenna circuit 431B are coupled to the switch S4A, the switch S4A is coupled to the communication unit 434, the communication unit 434 is coupled to the control unit 436, and the control unit 436 is coupled to the measuring unit 438.

The antenna circuit 431A includes an antenna unit 432A1, an antenna unit 432A2 and a signal amplifier 433A. The antenna circuit 431B includes an antenna unit 432B1, an antenna unit 432B2 and a signal amplifier 433B. In the connection relationship, the antenna unit 432A1 is coupled to the signal amplifier 433A, and the signal amplifier 433A is coupled to the antenna unit 432A2. The antenna unit 432B1 is coupled to the signal amplifier 433B, and the signal amplifier 433B is coupled to the antenna unit 432B2. In some embodiments, the signal amplifiers 433A and 433B can in turn be implemented as signal retransmission devices.

Similarly, the node substrate 132B2 includes a switch S4B, an antenna circuit 451A, an antenna circuit 451B, a communication unit 454, a control unit 456 and a measuring unit 458. In the connection relationship, the antenna circuit 451A and the antenna circuit 451B are coupled to the switch S4B, the switch S4B is coupled to the communication unit 454, the communication unit 454 is coupled to the control unit 456, and the control unit 456 is coupled to the measuring unit 458.

The antenna circuit 451A includes antenna unit 452A1, antenna unit 452A2 and signal amplifier 453A. Antenna circuit 451B includes antenna unit 452B1, antenna unit 452B2 and signal amplifier 453B. In the connection relationship, antenna unit 452A1 is coupled to signal amplifier 453A, and the signal amplifier 453A if further coupled to the antenna unit 452A2. The antenna unit 452B1 is coupled to the signal amplifier 453B, and the signal amplifier 453B is further coupled to the antenna unit 452B2. In some embodiments, signal amplifiers 453A and 453B can in turn be implemented as signal retransmission devices.

The main differences between node substrates 132A2 and 132B2 in Fig. 4 and node substrates 132A1 and 132B1 in Fig. 2 include: The node substrates 132A1 and 132B1 in Fig. 2 include two communication units respectively, while the node substrates 132A2 and 132B2 in Fig. 4 only include one communication unit, and through the switch, the communication unit is controlled to be connected to the antenna circuit in the control channel (composed of antenna circuits 431A and 451A) or the antenna circuit in the data channel (composed of antenna circuits 431B and 451B).

As illustrated in Fig. 4, the switch S4A includes end points P41, P42 and P43. The switch S4A can selectively connect end point P41 to P43 or connect end point P42 to P43. Similarly, switch S4B includes end points P44, P45 and P46. The switch S3B can selectively connect end point P44 to P46 or connect end point P45 to P46.

When the end point P41 is connected to the end point P43, the communication unit 434 is electrically connected to the antenna circuit 431A. At this time, the communication unit 434 is configured to receive control messages from the antenna circuit 431A. On the other hand, when the end point P42 is connected to the end point P43, the communication unit 434 is electrically connected to the antenna circuit 431B. At this time, the communication unit 434 is configured to transmit reply messages to the antenna circuit 431B.

The operation method of switch S4B is similar to that of switch S4A and will not be described in detail here.

In some embodiments, after receiving the control message, the antenna circuit 431A transmits the control message directly to the adjacent next node substrate 132B2 through the antenna unit 432A2, via the switch S4A connected to end points P41 and P43, antenna unit 432A1 in antenna circuit 431A further transmits the control message to the communication unit 434 and the control unit 436. After the control unit 436 receives the control message, the control unit 436 determines whether to perform a measure operation or other operations according to the control message and generates a reply message, and the control unit 436 transmit the reply message to the antenna circuit 431B through the switch S4A connected to the communication unit 434 and end points P42 and P43. The antenna unit 432B1 of the antenna circuit 431B then transmits the reply message to the antenna unit 412B.

Compared with the node substrates 132A1 and 132B1 in Fig. 2, the node substrates 132A2 and 132B2 in Fig. 4 use a switch to switch the message transmission direction, which can save a communication unit and achieve the same results and achieve similar effects to node substrate 132A1 and 132B1 in Fig. 2.

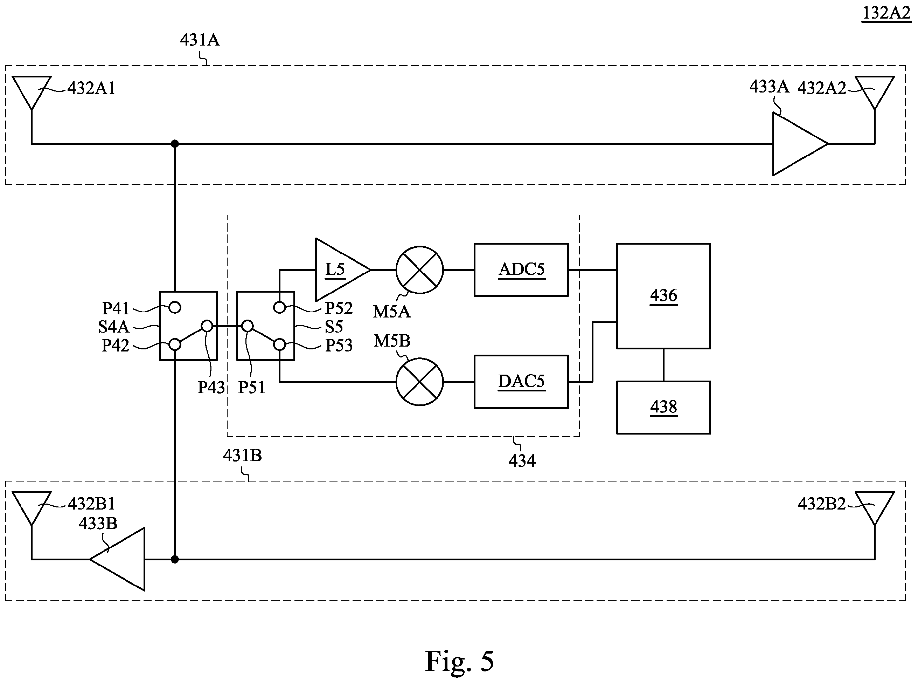

Reference is made to Fig. 5. Fig. 5 is a schematic diagram illustrating the node substrate 132A2 according to some embodiments of the present disclosure. In Fig. 5, only node substrate 132A2 is shown for illustration purposes. However, the structure and operation of the node substrate 132A2 depicted in Fig. 5 are also applicable to the node substrates 132B and 132C in Fig. 1 and the node substrate 132B2 in Fig. 4.

As illustrated in Fig. 5, in some embodiments, the node substrate 132A2 includes an antenna circuit 431A, an antenna circuit 431B, a switch S4A, a communication unit 434, a control unit 436 and a measuring unit 438. In the connection relationship, the antenna circuit 431A is coupled to the switch S4A, the switch S4A is coupled to the communication unit 434, and the communication unit 434 is coupled to the control unit 436. The control unit 436 is coupled to the measuring unit 438, and the antenna circuit 431B is coupled to the switch S4A.

The structure and operation method of the antenna circuits 431A and 431B in Fig. 5 are similar to those of the antenna circuits 431A and 431B in Fig. 4. The detail will not be described herein.

As illustrated in Fig. 5, the communication unit 434 includes a switch S5, a low amplifier noise L5, a frequency mixer M5A and M5B, an analog to digital converter ADC5 and a digital to analog converter DAC5. In the connection relationship, the low noise amplifier L5 is coupled to the switch S5, the frequency mixer M5A is coupled to the low noise amplifier L5, the analog to digital converter ADC5 is coupled to the frequency mixer M5A, the frequency mixer M5B is coupled to the switch S5, and the digital to analog converter DAC5 is coupled to the frequency mixer M5B.

In some embodiments, the frequency mixer M5A is a down-conversion frequency mixer, while the frequency mixer M5B is an up-conversion frequency mixer.

In operation, when the communication unit 434 is configured to receive the control message, the end points P41 and P43 of the switch S4A are connected, and the end points P51 and P52 of the switch S5 are connected, so that the communication unit 434 receives control message via the antenna circuit 431A. On the other hand, when the communication unit 434 is configured to transmit reply message, the end points P42 and P43 of the switch S4A are connected, and the end points P51 and P53 of the switch S5 are connected, so that the communication unit 434 transmits reply message via the antenna circuit 431B.

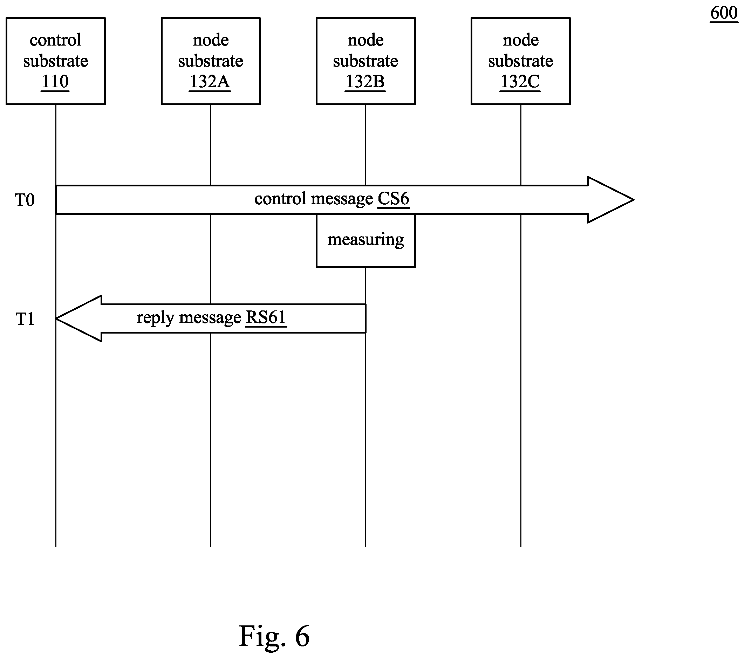

Reference is made to Fig. 6. Fig. 6 is a schematic diagram illustrating an operation method 600 of the wireless communication system 100 according to some embodiments of the present disclosure. As illustrated in Fig. 6, in an embodiment, the control substrate 110 transmits the control message CS6 to the node substrates 132A, 132B and 132C at time point T0. In some embodiments, control message CS6 includes instructions that require node substrate 132B to measure voltage and return the measure data at time point T1. The node substrates 132A, 132B and 132C synchronously receive the control message CS6 sent by the control substrate 110 via the control channel. Since the control message CS6 only requires node substrate 132B to measure voltage, according to the control message CS6, the control units of node substrates 132A and 132C do not perform the operation of measuring voltage, and only the control unit of node substrate 132B performs the operation of measuring voltage.

Therefore, based on the control message CS6, after the measuring unit of the node substrate 132B measures the voltage value of the energy storage element 134B, the control unit of the node substrate 132B generates the reply message RS61 according to the voltage value obtained after the measuring unit of the node substrate 132B measures the energy storage element 134B.

After the reply message RS61 is generated, the communication unit of the node substrate 132B transmits the reply message RS61 to the control substrate 110 through the data channel at time point T1.

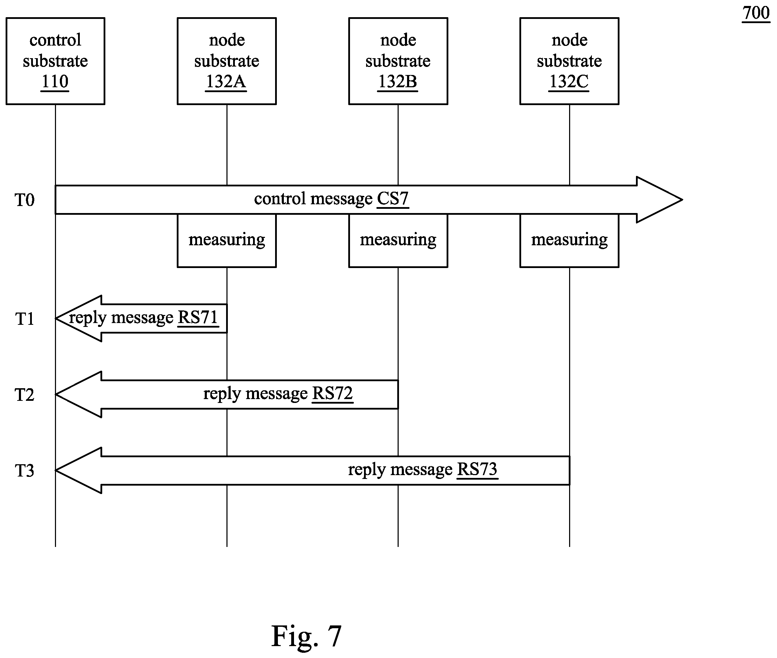

Reference is made to Fig. 7. Fig. 7 is a schematic diagram illustrating another operation method 700 of the wireless communication system 100 according to some embodiments of the present disclosure. As shown in Fig. 7, in one embodiment, the control substrate 110 transmits the control message CS7 to the node substrates 132A, 132B and 132C at time point T0. In some embodiments, the control message CS7 includes instructions that require node substrates 132A, 132B and 132C to measure the voltage and return the measure data at time points T1, T2 and T3 in sequence. In detail, the control message CS7 includes the following messages: after the node substrate 132A measures the voltage, returns a reply message at time point T1; after the node substrate 132B measures the voltage, returns a reply message at time point T2; and after the node substrate 132C measures the voltage, returns a reply message at time point T3.

The node substrates 132A, 132B and 132C synchronously receive the control message CS7 sent by the control substrate 110 via the control channel. Based on the control message CS7, the control unit of the node substrate 132A controls the measuring unit of the node substrate 132A to measure the voltage value of the energy storage element 134A, and according to the voltage value obtained by the measuring unit of the node substrate 132A measuring the energy storage element 134A, the control unit of the node substrate 132A generates the reply message RS71, and based on the control message CS7, the reply message RS71 is transmitted to the control substrate 110 through the data channel at time point T1.

Similarly, based on the control message CS7, after the control unit of the node substrate 132B controls the measuring unit of the node substrate 132B to measure the voltage value of the energy storage element 134B, according to the voltage value obtained by the measuring unit of the node substrate 132B measuring the energy storage element 134B, the control unit of the node substrate 132B generates the reply message RS72, and based on the control message CS7, the reply message RS72 is transmitted to the control substrate 110 through the data channel at time point T2.

Similarly, based on the control message CS7, after the control unit of the node substrate 132C controls the measuring unit of the node substrate 132C to measure the voltage value of the energy storage element 134C, according to the voltage value obtained by the measuring unit of the node substrate 132C measuring the energy storage element 134C, the control unit of the node substrate 132C generates the reply message RS73, and based on the control message CS7, the reply message RS73 is transmitted to the control substrate 110 through the data channel at time point T3.

Although reply messages RS71 to RS73 are transmitted to the control substrate 110 through the data channel, however, based on control message CS7, reply messages RS71 to RS73 are transmitted in the data channel at different time points, which can avoid the problem of mutual interference between reply messages.

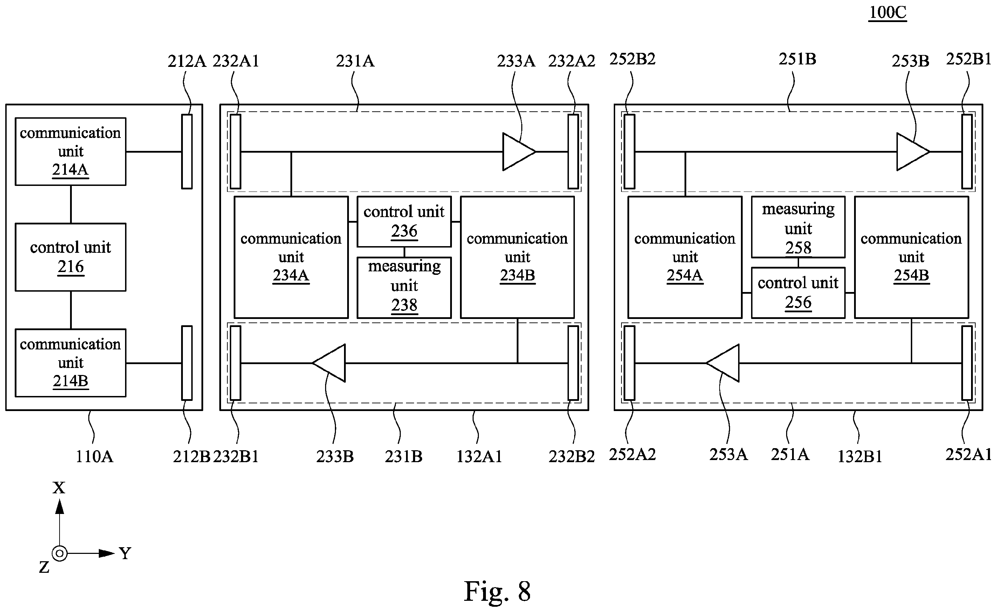

Reference is made to Fig. 8. Fig. 8 is a schematic diagram illustrating a top view 100C of another wireless communication system 100 according to some embodiments of the present disclosure. The difference between the top view 100C of the wireless communication system 100 in Fig. 8 and the top view 100A of the wireless communication system 100 in Fig. 2 is that the node substrate 132B1 in the top view 100C is configured by rotating the node substrate 132B1 in the top view 100A by 180 degrees on the XY plane.

In other words, in the embodiments of the present disclosure, the node substrate can be flexibly placed and can still form a control channel and a data channel to transmit control messages and reply messages.

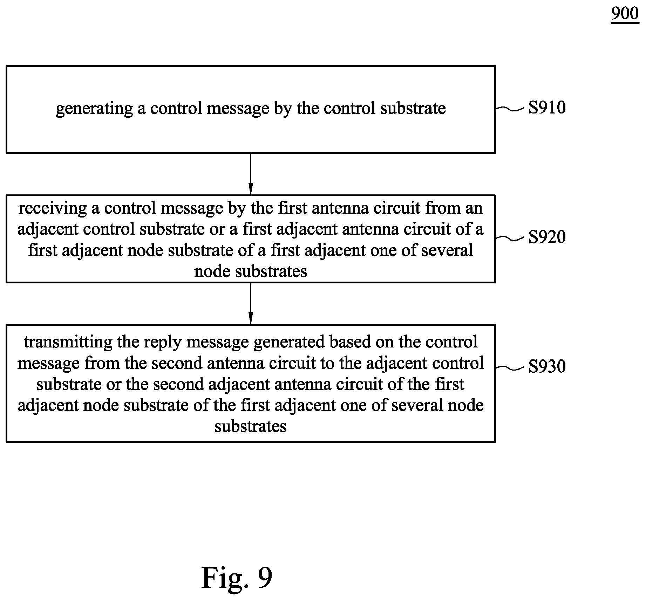

Reference is made to Fig. 9. Fig. 9 is a flow chart illustrating a control method 900 according to some embodiments of the present disclosure. The control method 900 of Fig. 9 is applicable to the wireless communication systems shown in Fig. 1, Fig. 2, Fig. 4 and Fig. 8. As illustrated in Fig. 9, the control method 900 includes operations S910 to 930. In operation S910, a control message is generated by the control substrate. In operation S920, the first antenna circuit receives a control message from an adjacent control substrate or a first adjacent antenna circuit of a first adjacent node substrate of a first adjacent one of several node substrates. In operation S930, the second antenna circuit transmits the reply message generated based on the control message to the adjacent control substrate or the second adjacent antenna circuit of the first adjacent node substrate of the first adjacent one of several node substrates. The detailed operation method of the control method 900 is similar to the operation method described above corresponding to Fig. 1 to Fig. 8 and will not be described in detail here.

In summary, the embodiments of the present disclosure provide a wireless communication system and a control method. When the antenna circuit on the node substrate receives an uplink (such as reply message) or downlink (such as a control message) signal, in addition to passing the signal or message to the communication unit and control unit on the node substrate, the signal or message will also be sent directly to the node substrate of the next station through the signal amplifier or signal retransmission device and antenna unit. When a node substrate transmits signals or messages directly to the next adjacent node substrate, it does not pass through the communication unit and control unit of this node substrate, thereby achieving the purpose of low-latency signal or message transmission.

Furthermore, in the embodiments of the present disclosure, the wireless communication system can be composed of a controller and several energy storage devices. After energy storage devices are placed in series (either forward or backward, no fixed direction is required), an uplink and downlink wireless communication network (including control channel and data channel) is automatically formed. The controller can send commands (such as control messages) through the uplink and downlink wireless communication networks, and the controller can receive the measure values (such as reply messages) returned by the energy storage device. To sum up, in the embodiments of the present disclosure, radio frequency wireless communication architecture is designed, and strong wave (transmission) components (such as signal amplifier or signal retransmission device) and antennas are designed on the node substrate (i.e., battery measure communication board). After several node substrates and control substrates are placed in series, signals or messages are transmitted to all node substrates through near-field network communication technology and signal strong wave (transmission) components, achieving low labor, low interference, low latency, and high flexible combination of wireless broadcast communication architecture.

In some embodiments, the functional units described in the embodiments of the present disclosure can all be implemented by circuits with the same or similar functions.

Regarding the words used in this article, unless otherwise noted, they generally have the ordinary meaning of each word used in this field, in the content disclosed here, and in the special content. Certain words configured to describe the present disclosure are discussed elsewhere in this specification to provide those skilled in the art with additional guidance in describing the present disclosure.

Although specific embodiments of the present disclosure have been disclosed with respect to the above-described embodiments, these embodiments are not intended to limit the present disclosure. Various substitutions and improvements can be made in this disclosure by those of ordinary skill in the relevant art without departing from the principles and spirit of this disclosure. Therefore, the scope of protection of the present disclosure is determined by the scope of the appended patent applications.

## Claims

1. A wireless communication system, comprising:
a control substrate, configured to generate a control message; and
a plurality of energy storage devices, wherein each of the plurality of energy storage devices comprises:
an energy storage element; and
a node substrate, electrically connected to the energy storage element, wherein the node substrate comprises a first antenna circuit and a second antenna circuit, wherein the first antenna circuit comprises a first antenna unit and a second antenna unit disposed at opposite sides of the node substrate, and the second antenna circuit comprises a third antenna unit and a fourth antenna unit disposed at opposite sides of the node substrate, wherein the first antenna circuit is configured to receive the control message from the control substrate adjacent to the first antenna circuit or a first adjacent antenna circuit of a first adjacent node substrate of a first adjacent one of the plurality of energy storage devices, wherein the second antenna circuit is configured to transmit a reply message generated based on the control message to the control substrate adjacent to the second antenna circuit or a second adjacent antenna circuit of the first adjacent node substrate of the first adjacent one of the plurality of energy storage devices.

2. The wireless communication system of claim 1, wherein a signal amplifier or a signal retransmission device is comprised between the first antenna unit and the second antenna unit, and the signal amplifier or the signal retransmission device is configured to amplify an intensity of the control message, and to transmit the control message to another adjacent one of the plurality of energy storage devices.

3. The wireless communication system of claim 1, wherein a signal amplifier or a signal retransmission device is comprised between the third antenna unit and the fourth antenna unit, wherein the signal amplifier or the signal retransmission device is configured to amplify an intensity of the reply message, and to transmit the reply message to another adjacent one of the plurality of energy storage devices.

4. The wireless communication system of claim 1, wherein the control substrate comprises a fifth antenna unit and a sixth antenna unit, wherein the fifth antenna unit is configured to transmit the control message, wherein the sixth antenna unit is configured to receive the reply message.

5. The wireless communication system of claim 1, wherein the control message comprises a first time point corresponding to a first energy storage device of the plurality of energy storage devices, wherein the first energy storage device is configured to transmit the reply message at the first time point.

6. The wireless communication system of claim 1, wherein the node substrate of each one of the plurality of energy storage devices further comprises:
at least one communication unit, coupled to one of the first antenna circuit and the second antenna circuit, wherein the at least one communication unit comprises:
a switch;
a low noise amplifier, coupled to the switch;
a first frequency mixer, coupled to the low noise amplifier;
an analog to digital converter, coupled to the first frequency mixer;
a second frequency mixer, coupled to the switch; and
a digital to analog converter, coupled to the second frequency mixer.

7. The wireless communication system of claim 1, wherein the node substrate of each one of the plurality of energy storage devices further comprises:
a first communication unit, coupled to the first antenna circuit;
a second communication unit, coupled to the second antenna circuit; and
a control unit, coupled to the first communication unit and the second communication unit.

8. The wireless communication system of claim 1, wherein the node substrate of each one of the plurality of energy storage devices further comprises:
a switch, selectively coupled to the first antenna circuit or the second antenna circuit;
a communication unit, coupled to the switch; and
a control unit, coupled to the communication unit.

9. The wireless communication system of claim 7 or 8, wherein the node substrate of each one of the plurality of energy storage devices further comprises:
a measuring unit, coupled to the control unit, configured to measure the energy storage element according to the control message.

10. The wireless communication system of claim 1, wherein the first antenna unit of the first antenna circuit is configured to receive the control message, the second antenna unit of the first antenna circuit is configured to transmit the control message to a second adjacent one of the plurality of energy storage devices; wherein the third antenna unit of the second antenna circuit is configured to receive the reply message from the second adjacent one of the plurality of energy storage devices, and configured to transmit the reply message through the fourth antenna unit of the second antenna circuit.

11. A control method, suitable for a wireless communication system comprising a control substrate, a plurality of node substrates and a plurality of devices under test, wherein each one of the plurality of node substrates comprises a first antenna circuit and a second antenna circuit, wherein the first antenna circuit comprises a first antenna unit and a second antenna unit disposed at opposite sides of each one of the plurality of node substrates, and the second antenna circuit comprises a third antenna unit and a fourth antenna unit disposed at opposite sides of each one of the plurality of node substrates, wherein the control method comprises:
generating a control message by the control substrate;
receiving the control message by the first antenna circuit from the control substrate adjacent to the first antenna circuit or a first adjacent antenna circuit of a first adjacent node substrate of a first adjacent one of the plurality of node substrates; and
transmitting a reply message generated based on the control message from the second antenna circuit to the control substrate adjacent to the second antenna circuit or a second adjacent antenna circuit of the first adjacent node substrate of the first adjacent one of the plurality of node substrates.

12. The control method of claim 11, wherein a signal amplifier or a signal retransmission device is comprised between the first antenna unit and the second antenna unit, wherein the control method further comprises:
transmitting the control message to a second adjacent node substrate after an intensity of the control message is amplified by the signal amplifier or the signal retransmission device.

13. The control method of claim 11, wherein a signal amplifier or a signal retransmission device is comprised between the third antenna unit and the fourth antenna unit, wherein the control method further comprise:
transmitting the reply message to the second adjacent antenna circuit of the first adjacent node substrate after an intensity of the reply message is amplified by the signal amplifier or the signal retransmission device.

14. The control method of claim 11, wherein the control substrate comprises a fifth antenna unit and a sixth antenna unit, wherein the control method further comprises:
transmitting the control message by the fifth antenna unit, and receiving the reply message by the sixth antenna unit.

15. The control method of claim 11, wherein the control message comprises a first time point corresponding to a first node substrate of the plurality of node substrates, wherein the first node substrate is further configured to transmit the reply message at the first time point.

16. The control method of claim 11, wherein each one of the plurality of node substrates further comprises a measuring unit, wherein each of the plurality of node substrates couples to a corresponding one of the plurality of devices under test, wherein the control method further comprises:
measuring the corresponding one of the plurality of devices under test according to the control message by the measuring unit.

17. The control method of claim 16, wherein the plurality of devices under test comprise a plurality of energy storage elements.

18. The control method of claim 11, further comprising:
receiving the control message by the first antenna unit of the first antenna circuit;
transmitting the control message by the second antenna unit of the first antenna circuit to a second adjacent one of the plurality of node substrates;
receiving the reply message from the second adjacent one of the plurality of node substrates by the third antenna unit of the second antenna circuit; and
transmitting the reply message through the fourth antenna unit of the second antenna circuit.
